# EUROPEAN PATENT APPLICATION

(11) **EP 2 799 672 A1**
(43) Date of publication of application: **05.11.2014**
(21) Application number: 11878512.0
(22) Date of filing: 26.12.2011
(51) Int. Cl.: F01L 1/34

(54) **ELECTROMAGNETIC BRAKE COOLING STRUCTURE FOR VARIABLE PHASE APPARATUS IN AUTOMOTIVE ENGINE**

(71) Applicant: Nittan Valve Co., Ltd., Hadano-shi Kanagawa 257-0031 (JP)
(72) Inventor: NIIRO Masaaki, Hadano-shi Kanagawa 257-0031 (JP); SUZUKI Motoharu, Hadano-shi Kanagawa 257-0031 (JP)
(74) Representative: Klingseisen, Franz
(86) International application number: PCT/JP2011/080028
(87) International publication number: WO 2013/098908

(57) **Abstract**

OBJECTS

To provide a cooling structure for effectively cooling an electromagnetic brake of a phase varying apparatus for an automobile engine

MEANS OF ACHIEVING THE OBJECTS

In a phase varying apparatus for varying the relative phase between an inner cylinder (20) of a camshaft (2) and a sprocket (12) rotatably mounted on the inner cylinder (20), the phase is varied by energizing an electromagnetic brake (40) adapted to put a braking force on a rotary drum (44) rotatably and coaxially mounted on the inner cylinder (20). A fastening bolt integrally connects the inner cylinder 20 with the body 2a of the camshaft (2). A gap S1 is formed between the head (6a) of the fastening bolt 6 and the inner cylinder (20). A spacer (24) is provided to place the rotary drum (44) at a right axial position on the periphery of the inner cylinder (20). The spacer (24) is provided with grooves (26) (to form oil channels 25) formed in one end face thereof in abutting contact with the head (6a) of the fastening bolt (6). Engine oil is lead to an oil sump (74) formed inside an annular braking section via oil paths (70) formed in the inner cylinder (20) and the oil channels (25). In order to secure a sufficient amount of oil to be stored in the oil sump (74) and supplied to the sliding surfaces for efficient cooling thereof, the length of the bolt head (6a) projecting into is reduced. Thus, an effectively increased amount of oil contributes to efficient cooling of the sliding surfaces.

## Description

### TECHNICAL FIELD OF THE INVENTION

This invention relates to a phase varying apparatus of an automobile engine for varying opening/closing timing of a valve by applying a braking force of an electromagnetic brake onto a rotary drum of the phase varying apparatus in order to vary the rotational phase of a camshaft controlling the valve timing relative to the sprocket connected to the crankshaft of the engine and, more particularly, to a cooling structure for cooling the electromagnetic brake by circulating the engine oil through it.

### BACKGROUND ART

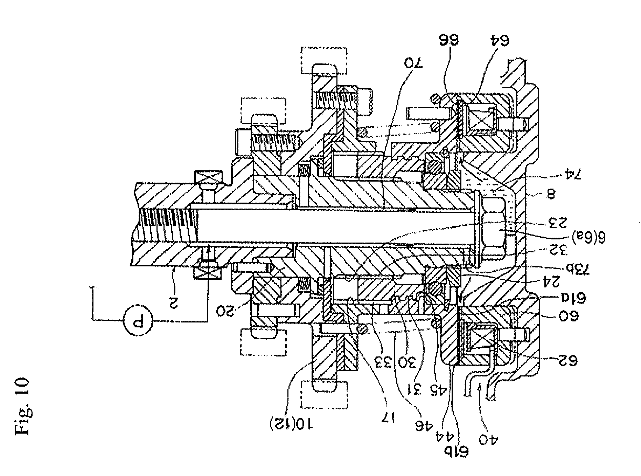

A typical phase varying mechanism of this type is disclosed in a Patent Document 1 listed below (Fig. 10), which has: a driving member 12 (or a sprocket) in the form of an outer cylinder 10 adapted to receive the driving force the engine via a crankshaft thereof; and a camshaft 2 of a valve operating mechanism; and an intermediate member 30, arranged between the driving member 12 and the camshaft 2. The intermediate member 30 has an internal and an external helical splines 32 and 33 to allow the intermediate member 30 to move in its axial direction and vary the relative phase between the driving member 12 and the camshaft 2. The helical splines 32 and 33, respectively, are female and male helical splines formed on the inner and outer peripheries, respectively, of the intermediate member 30. A male helical spline 23 is formed on the outer periphery of an inner cylinder 20 of the camshaft 2 A female helical spline 17 is formed on the inner periphery of the outer cylinder 10. A square male thread 31 is formed on the outer periphery of the intermediate member 30. A square female thread 45 is formed in the inner periphery of a rotary drum 44. A coil spring 46 is disposed between the outer cylinder 10 and the rotary drum 44.

Thus, when a braking force of an unrotatable electromagnetic brake 40 is acted upon the rotary drum 44 which is rotatably supported by the camshaft 2, the rotary drum 44 is retarded relative to the driving member (sprocket) 12. As a result, the intermediate member 30 is moved in the axial direction so as to cause the camshaft 2 to be rotated relative to the driving member (sprocket) 12, thereby varying the relative phase between driving member (sprocket) 12 and the camshaft 2. Reference numeral 8 indicates a clutch cover 8 of the phase varying apparatus, which is housed in an engine room so that it is operated in the engine oil atmosphere.

The electromagnetic brake 40 comprises an annular clutch case 60 having a generally C-shaped cross section for accommodating therein an electromagnetic coil 62, a retention plate 64 for closing the opening of the clutch case inner wall 60and a friction member 66 glued onto the retention plate 64. When the sliding surfaces of the generally porous friction member 66 and of the rotary drum 44 in sliding contact with each other are heated by friction, such additives as anti-oxidizing agent, friction modifier, and dispersive cleaning agent dispersed in the engine oil will be deposited on the friction member 66, thereby clogging the porous surface of the friction member 66 and reducing the friction torque generated by the friction between the friction member 66 and rotary drum 44 and hence degrading the braking power of the electromagnetic brake 40.

Thus, in order to suppress heating of the sliding surfaces of the friction member 66 and rotary drum 44, engine oil is supplied to an oil sump 74 arranged radially inside the clutch case 60 via oil paths 70 and via side holes 73b formed in the camshaft 2, and then supplied to the sliding surfaces through notches 61a and 61b (serving as oil inlet and oil outlet port, respectively) formed in the inner and outer peripheries of the sliding surfaces.

The inner cylinder 20, which is a part of the camshaft 2, is linearly integrated with the body 2a of the camshaft 2 with a fastening bolt (or cam bolt) 6. Thus, by simply screwing a spacer member 24 onto the periphery of the inner cylinder 20, an automobile manufacturer can easily mount a phase varying apparatus having the outer cylinder 10 (sprocket 12), rotary drum 44, and the intermediate member 30 all integrated on the inner cylinder 20.

### PRIOR ART DOCUMENT

### PATENT DOCUMENT

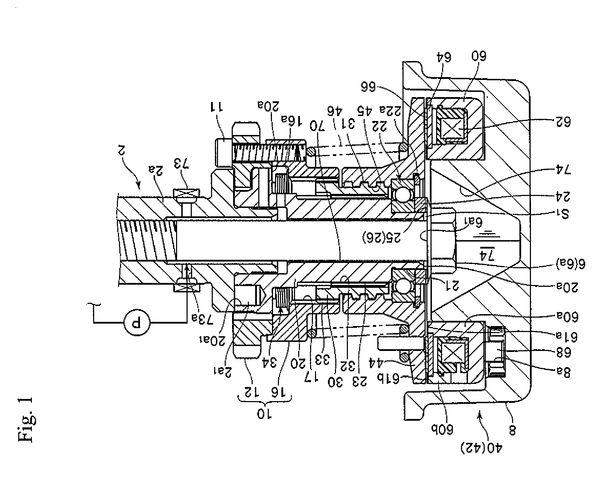

Patent Document 1: JPA Laid Open inner cylinder 2009-156107 (Figs. 1, 3, 5 and Paragraphs 0038 through 0040)

### SUMMARY OF THE INVENTION

### OBJECTS TO BE ACHIEVED BY THE INVENTION

In a conventional phase varying apparatus, however, it is necessary to provide the spacer member 24 not to block the side holes 73b formed in the inner cylinder 20, that is, the oil is supplied from within the oil paths 70 of the camshaft 2 to the oil sump 74 through the side holes 73b without being blocked by the spacer member 24. It is also necessary to arrange the inner cylinder 20 such that the side holes 73b face the oil sump 74. Consequently, the inner cylinder 20 and the head portion 6a of the fastening bolt 6 protrude in the oil sump 74, narrowing the inner volume of the oil sump 74 and limiting the amount of oil to be stored therein. Consequently, conventional phase varying apparatuses have a disadvantage that the amount of oil supplied to the sliding surfaces is insufficient for efficient cooling thereof.

A further problem if the diameter of the side hole 73b is increased, or if a multiplicity of side holes 73b is provided, in an effort to increase the amount of oil to be supplied to the oil sump 74, in that the effective fixation area available for the bolt 6 to be secured on the inner cylinder 20 is decreased at the position of the side hole 73b, thereby reducing the rigidity of the inner cylinder 20 or reducing the durability of the phase varying apparatus.

Third, it is a difficult and tedious work to form such side holes 73 in the curved cylindrical surface of the inner cylinder 20 using a drill.

The inventors of the present invention came up with an idea of securely fixing a spacer member and an inner cylinder axially between the fastening bolt and the camshaft so as to form a minute gap between the seat face of the fastening bolt head and the inner cylinder. The inventors also came up with a multiplicity of radial oil communicating holes provided between the spacer member and the seat face of the fastening bolt head.

It has been verified in the experiments performed on trial products that such structural improvement can solve the above-mentioned first through third problems, which inspired the inventors to seek a patent for the improvement.

On the other hand, it is found that this structural change poses a new problem as discussed below.

In view of recent severe exhaust gas regulations that require satisfactory operability of an automobile engine at much lower temperatures (even below freezing temperature) than conventional operating temperatures, it is necessary for a phase varying apparatus for an automobile engine to maintain secure operability at such very low temperatures.

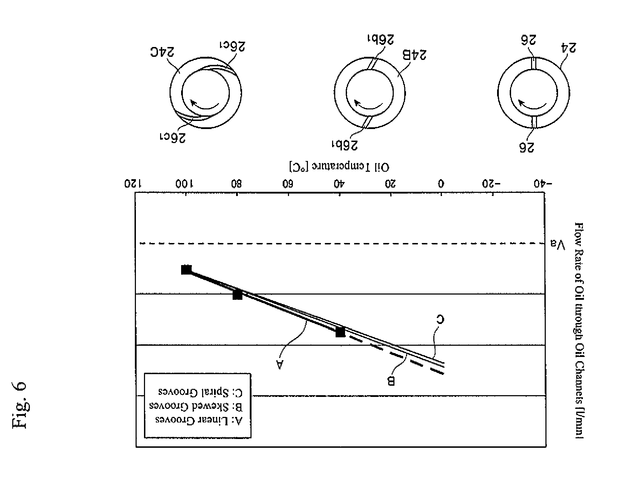

On the other hand, as is well known, engine oils become extremely sticky and less fluid at very low temperatures especially below the freezing point. It is true that heat is well transferred from a cold engine to an engine oil at low temperatures, but cold engine oil has a high viscosity and difficult to smoothly flow out of the space between the friction member and the sliding face of the rotary drum. Further, as the engine oil becomes viscous at low temperatures, less amount of oil is pumped into other sections of the engine than into oil paths of the camshaft of the phase varying apparatus, so that the flow rate of oil through the oil paths is increased accordingly. In other words, since the flow rate of oil from the oil channels (grooves formed in the spacer) communicated with the oil channel of the camshaft is inversely proportional to the oil temperature (as shown in Fig. 6), it is true that an amount of oil stored in oil sump, and hence oil supplied to the slidable friction faces, increases with decreasing oil temperature.

Consequently, the friction between the friction member and the sliding surface of the rotary drum is extremely lowered, and so is the frictional torque that act on the friction surfaces, thereby making it difficult to control the rotary drum by an electromagnetic brake.

In such a case as mentioned above, it is still possible to control the rotary drum by raising the level of the electric current supplied to the electromagnetic brake to intensify the pressure that acts on the friction member. However, under an increased electricity, the rotary drum can be harshly braked by the electromagnetic brake, which might cause an unexpectedly large phase difference between the camshaft and the sprocket, thereby entailing a new problem that the phase varying apparatus fails to precisely control the phase angle of the camshaft relative to the sprocket.

Thus, the inventors of the present invention have come to a conclusion that in order to prevent the braking power of the rotary drum from being reduced at very low temperatures (due to a loss of friction between the two sliding surfaces in contact), the amount of oil supplied to the sliding surfaces be reduced. This can be fulfilled by reducing the amount of oil supplied from the oil sump through the oil channels.

It is noted that, although the flow rate of oil through the oil channels increases in inversely proportionally to the oil temperature, flow rate of the oil can be yet reduced even at low temperatures by narrowing the width of the communication grooves formed in the spacer member and/or increasing the length of the oil channels to increase the flow resistance of oil in the grooves for the cold sticky engine oil. It should be appreciated that, if the flow resistance of the oil channels is increased, a predetermined flow rate of oil to the sliding surfaces can be secured at normal temperatures without being much influenced by the incremental flow resistance of oil in the oil channels, provided that the number of the oil channels is increased as needed.

Since the outer diameter (or the distance between the inner and outer diameters) of the ring shape spacer member is not sufficiently large, it is preferable, from the point of increasing the lengths of the grooves, to provide grooves skewed at an angle with respect to its associated radius on the spacer member, or to provide spiral grooves each having an increasing inclination angle with respect to its associated radius.

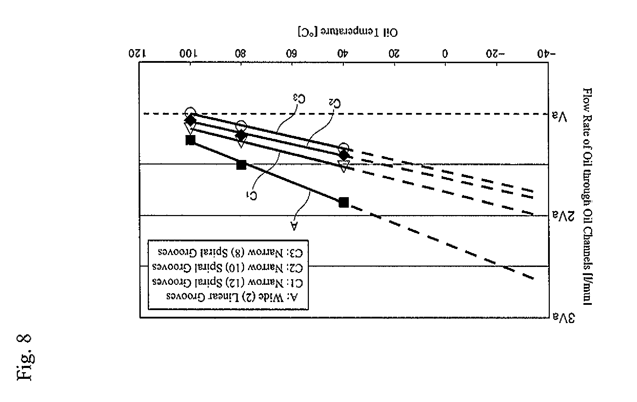

It has been experimentally verified, using three different types of test products having eight, ten, and twelve oil channels in the form of spiral grooves, which are longer than afore-mentioned skewed grooves, that a predetermined sufficient flow rate (Va) of oil for effective cooling of the sliding surfaces can be obtained at a normal temperature and above, as shown in Fig. 8 by lines C1, C2, and C3, Below zero degree centigrade, the oil flow rate through the spiral grooves (indicated by symbol A) is greatly reduced as compared with that through a pair of linear oil channels of the first embodiment (described later in detail). Thus, it is apparent that the fourth problem (that is, lowering of electromagnetic braking power at low temperatures) can be overcome by the present invention.

In view of the first through the third problems pertinent to prior art apparatuses, it is therefore an object of the present invention to provide a cooling structure of an electromagnetic brake of a phase varying apparatus for an automobile engine, wherein a fastening bolt head has less projection into the oil sump provided radially inside the sliding faces of the friction member of the clutch case and the rotary drum, thereby increasing the capacity of the oil sump so as to secure a sufficient amount of engine oil in the oil sump for effective cooling of the sliding surfaces.

It is another object of the invention to solve the fourth problem mentioned above by providing a cooling structure that can reduce the amount of engine oil supplied to the oil sump, and hence supplied to the sliding surfaces, in the event that the viscosity of the engine oil becomes high at very low temperatures, below zero for example, without lowering the performance of the cooling structure at normal temperature, the cooling structure thus enabling the phase varying apparatus to accurately control the relative phase angle between the camshaft and the sprocket by the electromagnetic brake.

### MEANS FOR SOLVING THE PROBLEMS

To achieve the first object above, there is provided, in accordance with the invention as recited in claim 1, a cooling structure of an electromagnetic brake provided in a phase varying apparatus for an automobile engine,
wherein,
a camshaft of a valve operating mechanism of the engine is rotatably and coaxially mounted on an annular sprocket driven by a crankshaft of the engine;
a rotary drum of the electromagnetic brake is rotatably mounted on the camshaft;
the electromagnetic brake is arranged in opposition to, and coaxially with, the rotary drum such that, in the phase varying apparatus, the electromagnetic brake is capable of exerting a braking force to the rotary drum to vary relative phase between the sprocket and the camshaft in association with phase retardation of the rotary drum relative to the sprocket,
   and wherein
the annular sprocket in the form of an outer cylinder and the rotary drum of the electromagnetic brake are integrated with, and fixedly arranged at a predetermined axial position with respect to, an inner cylinder of the camshaft via a ring shape spacer member mounted on the outer periphery of the inner cylinder;
the inner cylinder is coaxially integrated with the camshaft by means of a fastening bolt;
the electromagnetic brake comprises:
   an unrotatably fixed annular clutch case having a C-shape longitudinal cross section and an opening that faces the rotary drum;
   an electromagnetic coil secured on the front end of the opening of the clutch case; and
   a friction member arranged in the front end of the opening of the clutch case,
the electromagnetic cooling structure comprises:
   an oil sump defined by a clutch cover surrounding a head of the fastening screw and supporting the back end of the clutch case,
   minute oil paths formed between the inner periphery of the inner cylinder and the outer periphery of the fastening screw, and communicated with the oil sump via at least one oil channel that crosses the inner cylinder,
the cooling structure characterized in that:
   the spacer member and the inner cylinder are coaxially and fixedly jointed together between the head of the fastening bolt and the camshaft to form a minute gap therebetween; and
the spacer member is provided in the surface thereof in abutting contact with a seat face of the head of the fastening bolt with the same number of oil groove (s) as that of said oil channel (s).

(Function) In operation the engine oil is supplied from the engine room to the oil sump surrounding the head of the fastening screw through oil channels (which are radial grooves formed in the spacer member) facing the seat face of the fastening bolt. The oil intervening between the sliding surfaces of the friction member of the clutch case and the rotary drum is expelled wherefrom by centrifugal force to the engine room, and at the same time new oil is introduced from the oil sump to the sliding surfaces to cool the surfaces.

In a conventional phase varying apparatus the inner cylinder and the head of the fastening bolt protrude into the oil sump (Fig. 10). In contrast, in the present invention, it suffices to configure the inner cylinder in such a way that the oil channels (that is, grooves formed in the spacer member in contact with the seat face of the fastening bolt head in communication with the oil sump) lie within the oil sump. Accordingly, the effective volume of the oil sump, and hence the amount of oil stored therein, is increased.

It should be noted that, unlike conventional oil paths formed in the camshaft, this cooling structure permits provision of a larger number of oil channels having wide cross sections for leading the oil from the oil paths to the oil sump without loosing the rigidity of the inner cylinder of the camshaft, since these oil channels are not formed in the side walls of the inner cylinder.

It should be appreciated that the inventive spacer member can be formed by shear-pressing and the oil channels can be press formed, in contrast to a conventional structure which requires tedious machining to drill holes in the wall of the inner cylinder.

In the cooling structure of the electromagnetic brake as recited in claim 1, the spacer member may be force fitted onto the outer periphery of the inner cylinder, as recited in claim 2.

(Function) Part manufacturers of the inventive phase varying apparatus may supply auto manufactures with a phase varying unit having a rotary drum and an outer cylinder (sprocket) both integrally assembled in the inner cylinder of the camshaft, so that auto manufacturers can themselves assemble a phase varying apparatus by simply securing the unit on the engine with a fastening bolt.

Conventionally, in order to fix the rotary drum 44 and the sprocket 12 in position relative to the inner cylinder 20, the spacer member 24 of the unit must be screwed onto the periphery of the inner cylinder 20 as shown in Fig. 10. Consequently, the inner periphery of the spacer member 24 and the outer periphery of the inner cylinder 20 must be threaded, which adds an extra manufacturing cost to the phase varying apparatus.

In contrast, in constructing the inventive cooling structure as recited in claim 2, the spacer member may be force fitted onto the outer periphery of the inner cylinder, without displacing the rotary drum and/or the sprocket from the axis of the inner cylinder.

It should be appreciated that force fitting of the spacer member onto the outer periphery of the inner cylinder is much simpler and easier than conventional work of screwing the spacer member.

It should be also appreciated that the spacer member does not require conventional tedious fabrication work to form a male thread on the outer periphery of the inner cylinder or a female thread in the inner periphery of the spacer member.

The oil channels formed in the spacer member recited in claim 1 or 2 may be provided with a multiplicity of grooves spaced at equal angular intervals in the circumferential direction of the spacer member, as recited in claim 3.

(Function) In general, the sliding surfaces of the friction member and the rotary drum are arranged perpendicular to a horizontal camshaft, with substantially half of the diametrically inner regions of the surfaces being higher than the level of oil in the oil sump, but at least one oil communication hole (formed in the spacer member) is inevitably higher than the oil level when the camshaft is in rotation, so that the oil discharged in the radially outward direction from said one oil communication hole is lead to the inner peripheries of the sliding surfaces and supplied to the surfaces uniformly in the radial direction of the sliding surfaces.

In order to achieve the second object above, the spacer member may be provided, as recited in claim 4, with a sufficient number of skewed grooves of adequate width, length, and skew angle with respect to radii thereof or a sufficient number of spiral grooves of adequate width, and increasing skew angle with respect to radii thereof, to establish said oil channels in such a way that the grooves not only ensure a sufficient flow rate of oil to the sliding surfaces of the friction member and the rotary drum without affecting the oil supply to other components of the engine at normal temperature, but also suppress the flow rate of oil to the sliding surfaces even at low temperatures.

(Function) It is preferable for the oil sump to secure a predetermined amount of oil for effective cooling of the sliding surfaces at all temperatures, not only at normal operating temperature but also at low operating temperature of an automobile On the other hand, the engine oil discharged from the pump must be diverted to those engine components that needs lubrication, including the sliding surfaces of pistons, camshaft bearings, and crankshaft bearings, in addition to the phase varying apparatus

To meet this requirement, a multiplicity of grooves (e.g. a pair of linear grooves as in the first embodiment) are formed in spacer member at equal angular intervals thereof in the circumferential direction so as to secure sufficient amount of oil Va in the sump for effective cooling of the sliding surfaces, with a consideration to balanced supply of oil to other components as well. Further, from the point of machinability of the grooves, it is preferable to provide linear grooves each having a relatively large width and a square cross section.

At very low temperature below zero, however, it should be considered that the viscosity of oil is so high and its fluidity is so small that the oil is not discharged smoothly out of the gap between the sliding surfaces, although heat transfer between the oil and the sliding surfaces is achieved at very low temperatures. Nevertheless, oil is supplied from the oil sump to the sliding surfaces, resulting in stagnation of oil and reduction of friction between the sliding surfaces (and hence the frictional torque generated there). This may greatly affect the performance of the electromagnetic brake.

It should be noted that, at very low temperatures, the oil flow rate through the oil channels increases with decreasing temperature of the oil, as shown in Fig. 6, due to the fact that the fluid resistances in other components of the engine other than the phase varying apparatus then increases that the relative amount of oil that flows through the oil paths in the camshaft increases.

More particularly, since the oil flow rate of the oil pump is constant for a given rotational speed of the engine (or crankshaft), viscos engine oil becomes much easier to flow through the phase varying apparatus (oil paths of the camshaft) than through other engine components at low temperatures.

Consequently, at very low temperatures below zero, the oil flow rate through the oil paths of the camshaft, and hence through the oil channels, is increased. As a result, the amount of oil supplied to the sliding surfaces via the oil sump is increased, tending to develop stagnation of sticky oil between the sliding surfaces and thereby decreasing the frictional torque, and hence lowering the performance of the electromagnetic brake.

Nevertheless, as recited in claim 4, the flow rate of sticky oil through the oil channels can be suppressed at very low temperatures by increasing the fluid resistance in the oil channels by, for example, making longer and narrower grooves (or oil channels) in the spacer member than paired linear grooves of the first embodiment, as shown in Fig. 8 by curves C1, C2, and C3. Thus, the oil flow rate through the oil channels can be reduced at low temperatures, though it is inversely proportional to the temperature as shown in Fig. 6. It is noted that the oil flow rate though the oil channels is further increased by increasing the length of the channels, as indicated by curves A, B, and C in Fig. 6. Thus, by providing a multiplicity of oil channels, skewed grooves, and/or spiral grooves, the amount of oil stored in the oil sump, and hence the amount of oil supplied to the sliding surfaces, can be decreased even at very low temperatures, thereby avoiding the loss of frictional torque.

On the other hand, although the grooves (oil channels) have large fluid resistance at low temperatures, engine oil can flow through them without being much affected by the fluid resistance at and above normal temperatures due to the fact that viscosity of engine oil is relatively low at those temperatures. Moreover, since a larger number of oil channels are provided as compared with those in the first embodiment (which is equipped with a pair of linear grooves), a sufficient amount of oil is secured in the oil sump for cooling the sliding surfaces, so that the sliding surfaces are effectively cooled.

Since skewed grooves and spiral grooves have larger length and larger tolerance for fluid resistance, it is possible to provide an optimum number of grooves having the most preferred configuration (selected from linear, skewed, and spiral grooves in accord with the use conditions of the engine and the viscosity of the engine oil used) adequately to suppress the loss of frictional torque generated by the sliding surfaces at very low temperature, below freezing point for example.

In the electromagnetic brake cooling structure of claim 4, the grooves formed in the spacer member may be skewed in the direction opposite to the rotational direction of the camshaft, as recited in claim 5.

(Function) Although the pipe resistance of the oil channels can be increased by skewing or spiraling the oil channels as recited in claim 4, the pipe resistance can be alternatively increased by skewing the oil channels away from the direction of the rotational direction of the camshaft, as recited in claim 5. In this instance, since the oil channels are moving in the opposite direction of the oil pressure acting on the oil in the oil channels, skewing facilitates smooth flow of oil in the oil channels. On the contrary, if the grooves are skewed in the same direction as the rotational direction of the camshaft, the oil can flow less smoothly (so that the amount of oil discharged out of the oil channels is suppressed) in the oil channel, since the oil flow is obstructed by the motion of the oil channels.

### RESULTS OF THE INVENTION

According to the invention recited in claim 1, the sump has a large volume, and hence a large amount of oil stored therein, a large amount of oil is supplied to the sliding surfaces of the friction member of the clutch case and of the rotary drum, thereby promoting cooling of the sliding surfaces and preventing loss of the frictional torque due to clogging of the friction member, thereby ensuring superb cooling performance of the electromagnetic brake.

It is noted that the stiffness nor the durability of the camshaft will not be reduced if the number and the cross sections of the oil channels are increased.

It is also noted that the oil channels can be formed in the spacer member in a simple manner when the spacer member is shear pressed with a press, so that the phase varying apparatus can be manufactured in a simple way at a low cost.

According to the invention recited in claim 2, since the rotary drum and the sprocket (outer cylinder) are temporarily fixed to the inner cylinder using the spacer member, the rotary drum nor the sprocket will not inadvertently drop off the inner cylinder during the transportation of the phase varying apparatus.

Installation of the spacer member on the periphery of the inner cylinder is simple, and so is building a cooling structure. In mounting a phase varying apparatus on an engine, a manufacturer can easily fix the rotary drum and the sprocket in position at their right axial positions via the spacer member by simply tightening a fastening bolt to the camshaft. It is therefore not difficult to install the phase varying apparatus on the engine as compared with a conventional one.

The invention can provide a cost effective phase varying apparatus, since its components does not require complicated machining (such as tapping of threads).

According to the invention as recited in claim 3, engine oil is discharged, during a rotation of the camshaft, from the oil channels above the oil level of the oil sump to a radially inner region of the sliding surfaces that the sliding surfaces are uniformly cooled in the radial direction, thereby permitting uniform braking in the circumferential direction.

According to the invention as recited in claim 4, engine oil is intensively circulated to the sliding surfaces during operation to effectively cool the surfaces at and above normal temperature, thereby preventing the loss of frictional torque that acts on the surfaces, and securing braking performance of the electromagnetic brake. Moreover, in order to secure the frictional torque acting on the sliding surfaces (that is to secure the performance of the electromagnetic brake) at low temperatures, especially very low temperatures, the invention suppresses the amount of sticky oil supplied to the sliding surfaces and reduce the amount of oil staying there. In this way, the invention can provide a phase varying apparatus equipped with a cooling structure capable of sustaining the circulation of oil through the sliding surfaces not only at normal temperature, but also at very low temperatures (below freezing point for example) by suppressing the circulation of engine oil through the sliding surfaces of the friction member and the rotary drum, preventing excessive oil supply therethrough which otherwise causes a loss of frictional torque. Thus, the invention enables the electromagnetic brake to accurately control the phase angle between the camshaft and the sprocket.

It should be appreciated that the adjustable range of pipe resistance of the skewed and spiral grooves is larger than that of linear grooves because the former grooves are longer than the latter grooves, and that this enables realization of the most optimum configuration (skewness, number, and width) of the oil channels to prevent degradation of frictional torque acting on the sliding surfaces at very low temperatures, and to provide an electromagnetic brake of a phase varying apparatus capable of accurately controlling the phase angle between a camshaft and a sprocket.

According to the invention as recited in claim 5, it is possible to effectively suppress incremental flow rate of sticky oil through the oil channels at a lower temperature, especially at very low temperature below zero degree Celsius. This can be done by providing an optimum number of oil channels in the form of skewed grooves of optimum widths, lengths, and a skew orientation in the opposite direction with respect to the rotational direction of the camshaft. In this way, the invention provides an electromagnetic brake of a phase varying apparatus with a preferred cooling structure that ensures accurate performance of the phase varying apparatus controlling the phase angle between the camshaft and the sprocket..

### BRIEF DESCRIPTION OF DRAWINGS

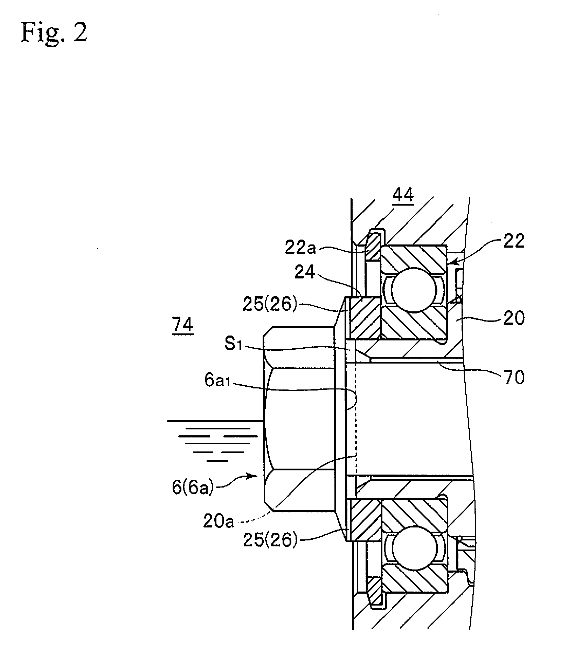

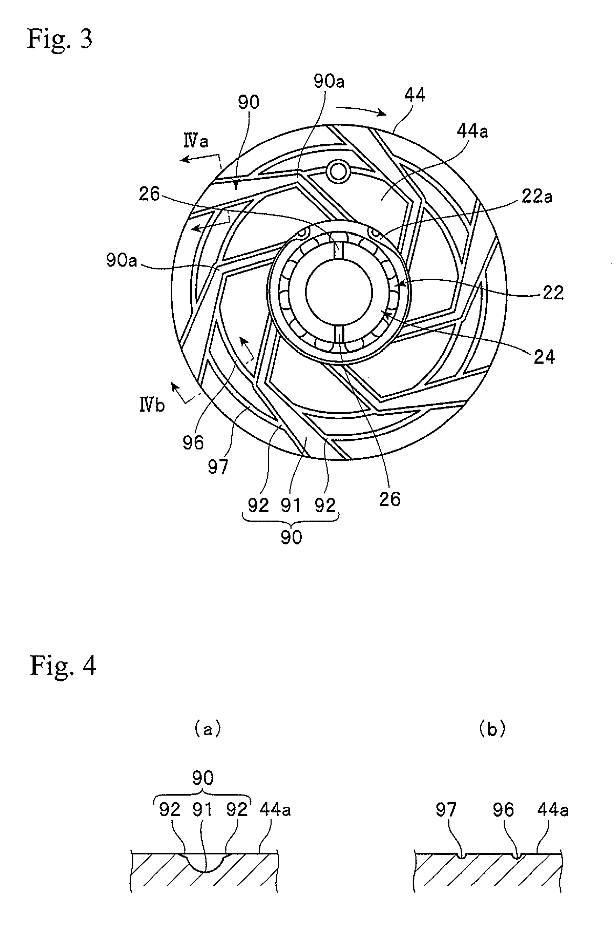

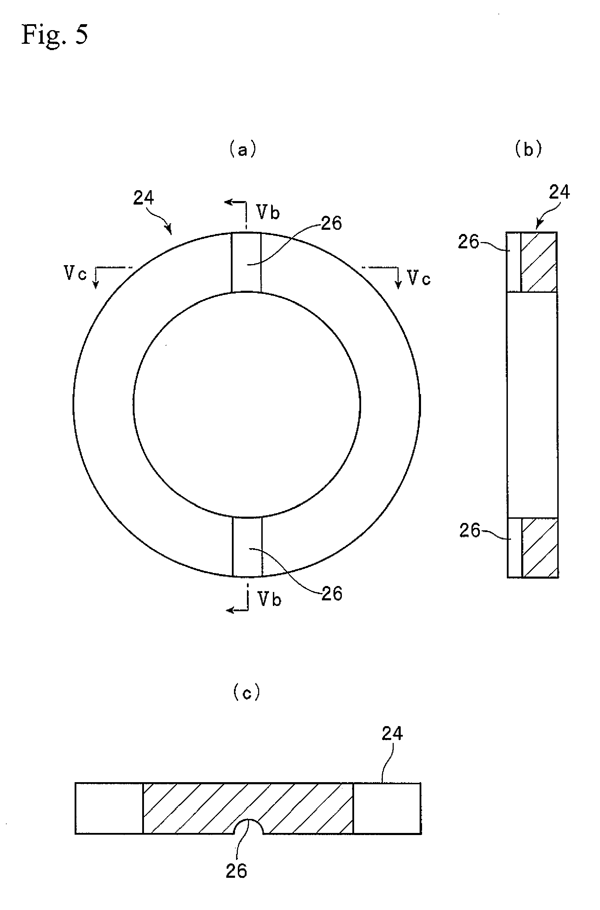

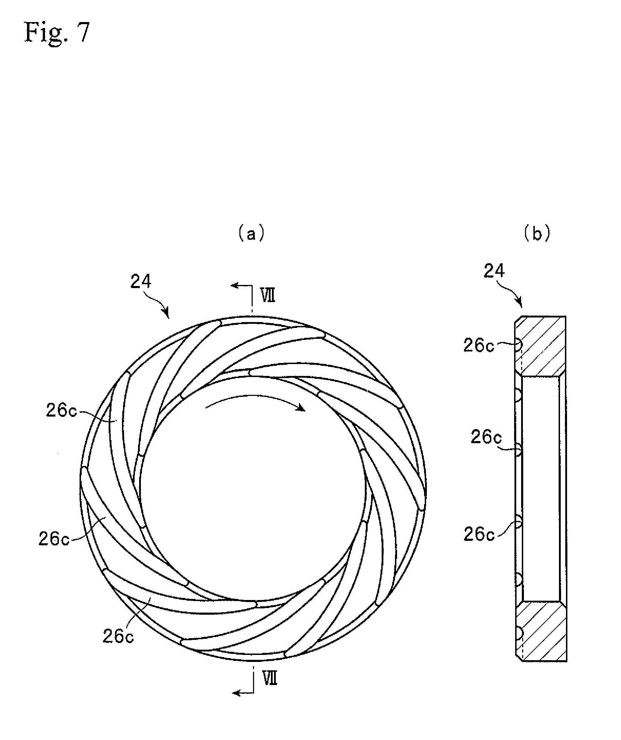

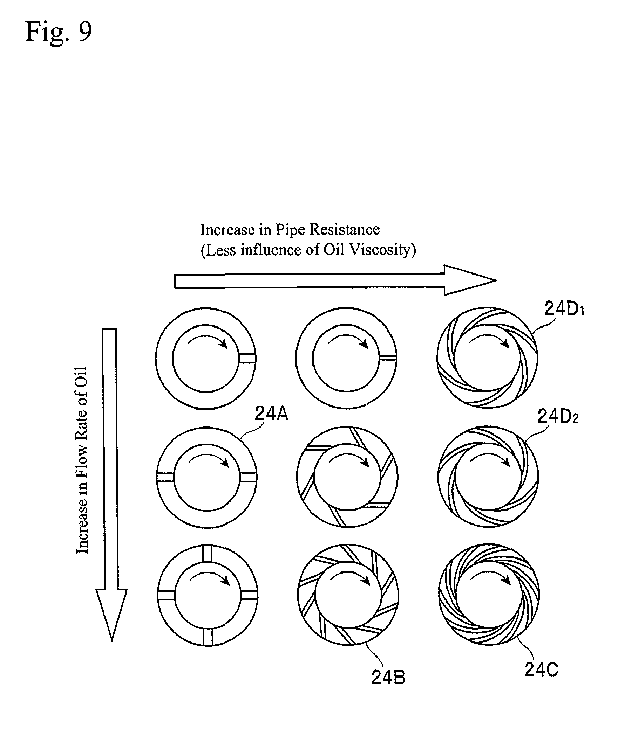

Fig. 1 is a longitudinal cross section of a phase varying apparatus for an automobile engine in accordance with a first embodiment of the invention. Fig. 2 is a longitudinal cross section, showing in enlarged scale the head portion of a fastening screw in abutment with an inner cylinder. Fig. 3 is a front view of a rotary drum facing a friction member. Fig. 4 shows in cross section radial oil guide grooves formed in the circular disc surface of the rotary drum. More particularly, Fig. 4(a) shows cross sections of the radial oil guide grooves taken along line IVa-IVa in Fig. 3, and Fig. 4(b) a cross section of a circumferential groove taken along line IVb-IVb in Fig. 3. Fig. 5 (a) is a front view of a spacer member in abutment on the bolt head, 5(b) a longitudinal cross section taken along line Vb-Vb in Fig. 5(a), and Fig. 5(c) a longitudinal cross section taken along line Vc-Vc in Fig. 5 (a). Fig. 6 is a graph showing the relationship between the flow rate of oil through oil channels (paired linear grooves, skewed grooves, and a spiral groove formed in the spacer member) and oil temperature. Fig. 7 shows a spacer member of a phase varying apparatus in accordance with a second embodiment of the invention. More particularly, Fig. 7(a) is a front view of the spacer facing the bolt head, and Fig. 7(b) a longitudinal cross section taken along line VII-VII in Fig. 7(a). Fig. 8 shows a relationship between oil temperature and the oil flow rate through the oil channels (spiral grooves) formed in the spacer member. Fig. 9 shows characteristic pipe resistances of, and oil flow rates through, oil channels having different grooves. Fig. 10 is a longitudinal cross section of a prior art phase varying apparatus.

### BEST MODE FOR CARRYING OUT THE INVENTION

The invention will now be described in detail by way of example.

Referring to Figs. 1 through 6, there is shown a phase varying apparatus in accordance with a first embodiment of the invention.

As shown in Fig. 1, this phase varying apparatus, mounted on an automobile engine, is adapted to transmit the rotational motion of a crankshaft of the engine to a camshaft of the apparatus to open and close an air intake/exhaust valve in synchronism with the rotation of the crankshaft while varying the valve opening/closing timing of the valve in accord with the operating conditions of the engine such as engine load and rpm of the engine.

The phase varying apparatus has a camshaft 2, a sprocket 12 in the form of an outer cylinder 10 receiving the power of the crankshaft, an annular inner cylinder 20 coaxial with, and rotatable relative to, the outer cylinder 10 to transmit the power to the camshaft 2, an intermediate member 30 arranged between the outer cylinder 10 and the inner cylinder 20 in helical spline engagement with the outer cylinder 10 and movable in the axial direction to thereby change the phase of the inner cylinder 20 relative to the outer cylinder 10, and an electromagnetic brake 40, arranged on one end of the inner cylinder 20 remote from the camshaft 2, for moving the intermediate member 30 in the axial direction.

The inner cylinder 20 is coaxially integrated with the camshaft body 2a by a fastening bolt 6 that passes through the inner cylinder 20. A positioning pin 2a1, projecting from the flange portion of the cam shaft body 2a, engages with a pin engagement hole formed in the inner cylinder so as to fix the inner cylinder 20 at a preferred angular position relative to the inner cylinder 20.

The outer cylinder 10 consists of a sprocket 12 operably engaged with the crankshaft of the engine by means of a chain and a spline case 16 securely fixed to the sprocket 12 with a fastening bolt 11 and having a spline engaged with the intermediate member 30. A disc spring assembly 34 is provided between a step 16a formed on the inner periphery of the outer cylinder 10 (spline case 16) and a step 20a formed on the outer periphery of the inner cylinder 20.

Reference numerals 32 and 33 respectively indicate a female and a male helical spline, numeral 23 a male helical spline formed on the outer periphery of the inner cylinder 20, and numeral 17 a female helical spline formed in the inner periphery of the spline case 16. Rotatably mounted on the periphery of the inner cylinder 20 is a rotary drum 44 of an electromagnetic brake 40 via a bearing 22 and a ring shape spacer member 24. A female square thread 45 is formed in the inner periphery of the rotary drum 44 for engagement with a square male thread 31 formed on the outer periphery of the intermediate member 30. The inner and outer splines 32 and 33, respectively, of the intermediate member 30 constitute reverse helical splines that converts a small axial movement of the intermediate member 30 into a large change in phase of the inner cylinder 20 relative to the outer cylinder 10.

The outer cylinder 10 mounted on the periphery of the inner cylinder 20, rotary drum 44, the intermediate member 30 and the bearing 22 are all assembled into an integral unit and fixedly secured to the camshaft body 2a with the fastening bolt 6 that passes through the inner cylinder 20.

More particularly, by force fitting the spacer member 24 coaxially onto the outer periphery of a small cylinder section 21 located closely to one end of the inner cylinder 20, the unit is secured in position on the body 2a and integrated therewith by screwing the fastening bolt 6 to the body 2a

Since the outer cylinder 10, the rotary drum 44, the intermediate member 30 and the bearings 22 are temporarily fixed to the inner cylinder 20 by the spacer member 24, they can be safely transported as a unit without being dropped off from the inner cylinder 20. Reference numeral 22a indicates a C-shape ring fitted in an inner groove formed in the inner cylinder 20 and engaged with the outer periphery of the bearings 22 for positioning the rotary drum 44 at a correct axial position relative to the inner cylinder 20 (Fig. 1).

It should be appreciated that, upon receipt of such unit from its manufacturer, a worker can easily mounted it on an engine by simply screwing the fastening bolt 6 into the body 2a.

The spacer member 24, the bearings 22, and the inner cylinder 20 are tightly and coaxially fixed to the camshaft body 2a, between the head 6a of the fastening bolt 6 and the camshaft body 2a. As shown in enlarged scale in Fig. 2, there is formed a minute annular gaps S1 between the seat face 6a1 of the fastening bolt 6 and the leading end 20a of the inner cylinder 20 so as to communicate with the oil paths 70 of the camshaft 2.

The spacer member 24 is provided, on its face in abutment against the seat face 6a of the fastening bolt 6, with a pair of linear grooves 26 (each having a width of 2 mm, a cross sectional width of 2 mm, and a length of 45 mm for example) that extend along a diameter, as shown in Fig. 5 in enlarged scale. As shown in Fig. 2, these linear grooves establish radial oil channels 25 between the seat face 6a1 of the fastening bolt 6 and the spacer member 23 to communicate with the oil paths 70 of the camshaft 2 via minute annular gaps S1.

An engine case 8, or clutch case 8, of the phase varying apparatus is fixed to a wall of the engine. The phase varying apparatus and the engine are operated in the engine oil atmosphere. An oil sump 74 is defined by the clutch cover 8 which surrounds the head portion 6a of the fastening bolt 6. The oil sump 74 is supplied with engine oil from the oil paths 70 of the camshaft via the small annular gap S1 between the seat face 6a1 of the bolt and the leading end 20a of the inner cylinder, and via the oil channels 25 formed between the seat face 6a1 and the spacer member 24.

The electromagnetic brake 40 has an electromagnetic clutch 42 supported by the clutch case 8, a rotary drum 44, rotatably supported by the inner cylinder 20 and coupled with the intermediate member 30 with a male square screw 31, for receiving a braking force from the electromagnetic clutch 42 in operation, and a torsion coil spring 46 mounted between the rotary drum 44 and the outer cylinder 10. The square female thread 45 is provided in the inner periphery of the rotary drum 44. The rotary drum 44 and the intermediate member 30 can rotate relative to each other along the square female thread 45 and square male thread 31. Hence, the intermediate member 30 can rotate on the square female thread 45 and the square male thread 31 while moving in the axial direction. The rotary drum 44 and the outer cylinder 10 are coupled together by the wound coil spring 46, so that, when the rotary drum 44 is free of any braking force, the outer cylinder 10, inner cylinder 20, intermediate member 30, and the rotary drum 44 rotate together as one body. Since the coil spring 46 is coaxially arranged between the rotary drum 44 and the outer cylinder 10 (spline case 16), they extend in the axial direction, but have a compact size in the radial direction.

Through ON/OFF operations and magnitude control of electricity supplied to the electromagnetic clutch 42, the intermediate member 30 can be moved in the axial direction as it is rotated on the square female thread 45 and the square male thread 31, thereby varying the relative phase between the outer cylinder 10 and the inner cylinder 20 to adjust the opening/closing timing of the valve by the cam (not shown) of the cam camshaft 2. Before the electromagnetic clutch 42 is energized, it is located at a position close to the clutch case 8, leaving a gap between the rotary drum 44 and the electromagnetic clutch 42, thereby permitting the outer cylinder 10 and the inner cylinder 20 to rotate together in phase. When energized, the electromagnetic clutch 42 attracts the rotary drum 44, causing the electromagnetic clutch 42 to be slid to the right (in Fig. 1) onto the rotary drum 44. Hence, the rotary drum 44 is acted upon by a braking force of the electromagnetic clutch 42. As a result, the rotary drum 44 is retarded relative to the outer cylinder 10. That is, the intermediate member 30 is advanced forward (to the right in Fig. 1) by the square male thread 31 and the square female thread 45, so that the inner cylinder 20 (camshaft 2) is rotated relative to the outer cylinder 10 (sprocket 12) by the action of the inner and outer helical splines 32 and 33 of the intermediate member 30, thereby varying the phase of the inner cylinder 20 (camshaft 2) relative to the outer cylinder 10 (sprocket 12). The rotary drum 44 is retained at the position where the braking force transmitted thereto and the force of the coil spring 46 balance out (that is, where the inner cylinder 20 has a predetermined phase relative to the outer cylinder 10).

On the other hand, when the electromagnetic clutch 42 is turned off, no braking force is transmitted to the rotary drum 44, so that the intermediate member 30, now subjected solely to the force of the coil spring 46, is retracted backward (to the left in Fig. 1) to its home position. Meanwhile, the inner cylinder 20 (camshaft 2) is rotated in the reverse direction to annihilate its phase difference relative to the outer cylinder 10.

Next, the structure of the electromagnetic clutch 42 of the electromagnetic brake 40 and a structure of cooling the frictional surface of the friction member 66 in contact with the rotary drum 44 will now be described.

As shown in Fig. 1, the electromagnetic clutch 42 includes: the generally annular unrotatable clutch case 60 having a C-shape longitudinal cross section with its open end facing the circular face of the rotary drum 44; the electromagnetic coil 62 housed in the clutch case 60; the metallic friction member retention plate 64 fixed inside the opening of the clutch case 60; and the flat friction member 66 mounted on the friction member retention plate 64 and slightly protruding from the front edges of the inner and outer peripheral walls 60a and 60b, respectively, of the clutch case 60. A multiplicity of pins 68, arranged in the circumferential direction of, and protruding from, the rear end of the clutch case 60, engage with the holes 8a formed in the clutch cover 8 so as to allow the clutch case 60 to slide in the axial direction without rotation in the circumferential direction.

The electromagnetic coil 62 is securely fixed to the inside of the clutch case 60 with a plastic mold. The retention plate 64, integrated with the friction member 66 and arranged inside the opening of the clutch case 60, is securely fixed to the inner and outer peripheral walls 60a and 60b of the clutch case 60 by swaging the inner and outer peripheries of the retention plate 64.

As the electromagnetic clutch 42 is turned on, the friction member 66 is brought into contact with the circular disc surface of the rotary drum 44 to generate a frictional force that acts on the disc face. It is a compact porous plate made from paper impregnated with a thermosetting resin, and attached to the clutch case 60 such that the front surface of the friction member 66 slightly projects from the front end of the inner and outer peripheral walls 60a and 60b, respectively, of the clutch case 60.

Engine oil is continually supplied to the sliding surfaces of the friction member 66 and the rotary drum 44 of the rotary drum 44 to suppress temperature rise in the surfaces.

As shown in Fig. 1, the oil sump 74 is defined by the engine case 8 such that the oil sump 74 lies radially inside the clutch case 60 and communicates with the oil paths 70 formed in the camshaft 2 and with a gap between the sliding surfaces of the inner wall 60 and rotary drum 44. The engine oil is pumped into the oil paths 70 of the camshaft 2 by a pump P via oil ports of journal bearings 73 and side holes 73a formed in the camshaft 2. The oil pumped into the oil paths 70 is supplied to the oil sump 74 via the minute gap S1 formed between the head of the seat face 6a1 of the fastening bolt 6 and the leading end 20a of the inner cylinder 20, and through a pair of radial oil channels 25 formed between the head of the fastening bolt and the spacer member 23.

As shown in Fig. 1, there is also provided at the front edge of the inner peripheral wall 60a of the clutch case 60 a notch 61a for introducing engine oil between the sliding surfaces of the friction member 66 and the rotary drum 44, and, at the front edge of the outer peripheral wall 60b of the clutch case 60, a notche 61b for leading the oil out of the sliding surfaces.

As the rotary drum 44 is rotated in association with the camshaft, the oil between the friction member 66 of the clutch case 60 and the sliding surface of the rotary drum 44 is flung out of the sliding surfaces (to the engine room) via the notches 61b by the centrifugal acceleration. At the same time, new oil is introduced from the oil sump 74 into the sliding surfaces via the notches 61b, facilitating circulation of oil through the sliding surfaces for efficient cooling of the sliding surfaces.

As shown in Fig. 3, there are provided in the disc face 44a of the rotary drum 44 facing the friction member 66 six fan shape oil guide grooves 90 spaced at equal angular intervals. Engine oil is lead from the oil sump 74 into a space between the sliding surfaces of the friction member 66 and the rotary drum 44 via the oil guide grooves 90, and further outward from the sliding surfaces.

In other words, in addition to engine oil supplied to the sliding surfaces between the friction member 66 and the rotary drum 44 via the notches 61a and 61b at the front edge of the inner peripheral wall 60a and outer peripheral wall 60b of the clutch case, engine oil is also supplied to, and expelled from, the guide grooves 90 of the rotary drum 44, so that oil circulation between the sliding surfaces is enhanced.

Particularly, since the oil guide grooves 90 extend in the reverse (counterclockwise) direction with respect to the rotation of the rotary drum 44 (camshaft 2) as shown by a clockwise arrow in Fig. 3, the rotation of the oil guide grooves 90 facilitates smooth flows of oil therein, thereby further enhancing cooling of the sliding surfaces.

Each of the oil guide grooves 90 has a fan-shape having a larger width at the outlet end thereof than its inner peripheral inlet end as shown in Fig. 3. Further, the grooves are provided with deflected sections 90a deflected in the tangential direction of the rotary drum 44 so as to enhance their oil discharge performance and cooling of the sliding surfaces.

In addition, the central regions 91 of the oil guide grooves 90 between tapered regions 92 are configured to have a U-shape transverse cross section as shown in Fig. 4(a). The tapered regions 92 are inclined at an acute angle (15 degrees for example) with respect to the flat disc surface 44a of the rotary drum 44 so as not to peal off the friction member 66 or locally wear. The disc face 44a of the rotary drum 44 is also provided with curved grooves 96 and 97 extending in parallel to the circumference of the disc and communicated with the radially extending oil guide grooves 90. It is noted that irresoluble materials (such as anti-oxidizing agent and dispersive cleaning agent) contained in engine oil will not accumulate in the narrow curved grooves 96 and 97 if deposited between the friction member 66 and the rotary drum 44 during braking, since these narrow grooves are communicated with the wider oil guide grooves 90.

The linear grooves 26, establishing the oil channels 25 between the spacer member 23 and the seat face 6a1 of the fastening bolt 6 to lead engine oil to the oil sump 74, have a semi-circular cross section for ease of manufacture. Since the linear grooves 26 have such semi-circular cross section, they can be formed by punching when the spacer member 23 is punched to have predetermined dimensions using a shear press.

Each of the linear grooves 26 is formed to have a relatively large semi-circular cross section of about 2 mm in width to ensure a minimum necessary flow rate Va of oil to the oil sump for efficient cooling of the sliding surfaces (as shown in Fig. 6). In other words, since the engine oil is delivered by the pump P not only to the oil paths 70 connected to the phase varying apparatus but also to such movable parts of the engine as pistons, camshaft bearings, and crankshaft bearings, the width of the linear grooves 26 is set to 2 mm, taking into consideration of a balance between necessary and sufficient supply of oil (Va) to the oil sump 74 through the oil channels 25 for cooling of the sliding surfaces and to other movable parts of the engine.

The amount of oil flowing through the oil channels 25 is inversely proportional to the oil temperature as indicated in Fig. 6 by line A, which implies that the flow rate of oil decreases with the oil temperature.

This is true, since the amount of oil discharged from the pump P is substantially constant but, at low temperatures, flows of oil to other parts of the engine through much narrower oil paths decreases more significantly, which in turn increases the oil flow rate through the oil paths 70 in the camshaft 2, resulting in an increase in the amount of oil supplied to the phase varying apparatus through the oil channels 25.

It is seen in Fig. 6 that at and above normal temperature and below zero degree, the flow rate of oil through the oil channels 25 formed with the paired linear grooves 26 ensures the minimum necessary flow rate Va of oil into the oil sump 74 for effective cooling of the sliding surfaces.

Since the oil channels 25 are given by the paired linear grooves 26 formed in the spacer member 23, one of the oil channels 25 is always higher than the oil level in the sump 74 when the camshaft 2 is in rotation, so that the oil discharged from that oil channel 25 in the radial direction is directly deposited inside the inner periphery of the sliding surfaces and spread uniformly in the circumferential direction on the sliding surfaces for uniform cooling. Fig. 7 shows the spacer member, an important element of the phase varying apparatus for an automobile engine. More particularly, Fig. 7(a) is a front view of the spacer member (viewed in the direction to face the oil sump), Fig. 7 (b) a cross section taken along line VII-VII in Fig. 7(a).

In the foregoing embodiment 1, the oil channels 25 are formed of paired linear grooves 26 (which are 2 mm in width, 2 mm in diameter, and 45 mm in length). In contrast, in the second embodiment, the oil channels 25C2 are formed of 10 spiral grooves 26c spaced apart at equal intervals in the circumferential direction of the spacer member 24.

Each of the spiral grooves 26C is a spiral extending in the same radial direction as rotational direction of the camshaft 2 (or of the spacer member 24) as shown by an arrow in Fig 7, and having a width of 1 mm, a semi-circular cross section of 1 mm in diameter. Hence, the fluid resistance of the oil channels 25C2 is larger than that of the oil channels 25 of the first embodiment. In this way, the oil channels 25C2 are adapted to ensure not only a minimum necessary flow rate Va of oil to the oil sump 74 for effective cooling of the sliding surfaces at and above normal temperature, but also effective suppression of flow rate of very sticky oil at lower temperatures, especially at very low temperatures, to thereby suppress a loss of frictional torque caused by an excessive supply of sticky oil to the sliding surfaces.

Other features of the second embodiment are the same as those of the first embodiment, so that a further description of the second embodiment will be omitted.

Referring to Figs. 7 and 8, there is shown a structural difference between the oil channels 25 of the first embodiment and the oil channels 25C2 of the second embodiment made up of 10 spiral grooves 26c. Fig. 8 compares the oil flow rates through the oil channels (consisting of 8, 10, and 12 spiral grooves) at different temperatures with that of the first embodiment (having a pair of linear grooves in the spacer member).

Since engine oil must be supplied between the sliding surfaces of the friction member 66 and rotary drum 44 via the oil sump 74, it is preferred to secure a sufficient amount of oil in the oil sump 74 for effective cooling of the sliding surfaces at all temperatures (including very low, high, and normal temperature).

To do so, the first embodiment is configured such that the radial oil channels 25 formed of paired linear radial grooves 26 of the spacer member 24 so as to provide a satisfactory oil temperature-oil flow rate A (Fig. 6 and 8), which insures a minimum necessary flow rate Va of oil to the oil sump 74 for efficient cooling of the sliding surfaces at and above normal temperature and above.

It should be noted that, although good heat conduction between the cold oil and the sliding surfaces is obtained at very low temperatures below zero degree Celsius, oil is not easily expelled from between the sliding surfaces due to its very high viscosity and low fluidity at such low temperature. Further, as sticky oil is supplied from the oil sump 74 to the sliding surfaces, an excessive amount of oil tends to stay between the sliding surfaces, which will diminish the friction between them and reduce the resultant frictional toque, thereby adversely influencing the performance of the electromagnetic brake.

Particularly at a lower temperature, since the flow rate of oil through the oil channels 25 is inversely proportional to the oil temperature, the flow rate of oil through the oil paths 70 is increase as shown in Figs. 6 and 8, and so is the amount of oil stored in the oil sump 74. Consequently, the amount of sticky oil supplied to the sliding surfaces via the oil sump 74 is increased, thereby encouraging significant stagnation of oil and reduction of friction between the sliding surfaces, and hence reduction of the braking performance of the electromagnetic brake.

In contrast, the oil channels 25C2 of the second embodiment has 10 spiral grooves 26c (each having a width of 1 mm and a semi-circular cross section of 1mm in diameter) extending in the same direction as the rotational direction of the camshaft 2 (spacer member 24) and spaced apart at equal intervals in the circumferential direction. The characteristic flow rate of oil through the oil channels 25C2 is slightly lower than the characteristic minim necessary flow rate Va of the oil channels 25 of the first embodiment (line A), as shown in Fig. 8 by a characteristic line C2.

Described in more detail, although each of the spiral grooves 26C (oil channels 25C2) has a width as narrow as 1 mm and a longer length than the linear groove, exhibiting a greater fluid resistance than the linear grooves 26, the spiral grooves 26C as a whole allow a smooth flow of oil to the oil sump 74 without imposing influential fluid resistance, particularly at temperatures above normal temperature, since the oil channels 25C2 include as many as 10 channels. Thus, as shown in Fig. 8 by line C2, the oil flow rate through the oil channels 25C2 is slightly lower than that of the oil channels 25 of the first embodiment indicated by line A, and still provide a oil flow rate higher than the minimum necessary oil rate Va. For this reason, oil is sufficiently stored in the oil sump 74 and supplied to the sliding surfaces of the friction member 66 and the rotary drum 44 for efficient cooling of the sliding surfaces.

On the other hand, at extremely low temperatures below zero Celsius for example, the viscosity of the engine oil is so high that high fluid resistance of the oil channels 25C2 (or of 10 spiral grooves 26c) greatly reduces the flow of oil into the oil sump 74 More particularly, at very low temperatures, the oil flow rate through the oil channels 25C decreases with decreasing temperature more significantly than that through the oil channels 25 of the first embodiment shown by line A, as shown in Fig. 8 by characteristic line C2. (The former flow rate is approximately 2.5 times Va at -20°C, while the latter flow rate is approximately 1.7 times Va, which is about 0.8 Va liters/min less than the former flow rate.) Consequently, the amount of oil stored in the oil sump 74 is decreased accordingly, and so is the amount of oil supplied to the sliding surfaces of the friction member 66 and the rotary drum 44. Thus, it is seen that the oil channels 25C2 having 10 spiral grooves 26C greatly reduces the amount of sticky oil staying in between the sliding surfaces in comparison to the oil channels 25, so that the loss of frictional torque in the second embodiment is not significant, affecting the performance of the electromagnetic brake only a little.

In Fig 8, characteristic lines C1 and C3 respectively represent temperature dependence of the oil flow rate through the oil channels 25C1 having 12 spiral grooves 26c and of the oil flow rate through the oil channels 25C3 having 8 spiral grooves 26c, respectively. It is seen from these lines that their characteristic temperature dependences are substantially the same as that of the oil channels 25C2 having 10 grooves 26C (line C2). The oil channels 25C1 (25C3) has more (less) grooves than the oil channels 25C2 by two, and hence provides a larger (smaller) oil flow rate than the latter.

Consequently, if the oil channels 25C1 or 25C3 are preferred to the oil channels 25C2 for a car under given use conditions and/or for a characteristic engine oil, the oil channels 25C1 (having 12 spiral grooves 26c) or the oil channels 25C3 (having 8 spiral grooves) may be selected in place of the oil channels 25C2 (having outer cylinder 10 spiral grooves 26c) in the spacer member 24.

In is recalled that the oil channels 25 having a pair of linear grooves 26 in accordance with the first embodiment have a temperature dependent oil flow rate characteristic A as shown in Fig. 6 and 8. Fig. 6 also shows temperature dependent characteristics B and C of oil channels 25B and 25C, respectively, having skewed grooves 26b1 and spiral grooves 26c1, respectively, in place of linear grooves 26. These grooves have the same width and the same semi-circular cross section as the linear grooves 26. The grooves 26b1 are skewed through a constant angle relative to associated radii. Skewness of the spiral grooves increases with their radii.

As seen in Fig. 6, the fluid resistances of the oil channels 25, 25B, and 25C, associated with the linear grooves 26, skewed grooves 26b1, or spiral grooves 26c1, respectively, are clearly proportional to the length of the respective oil channels (grooves).

Consequently, the oil flow rates through the oil channels 25B and 25C are decrease at low temperatures, especially extremely low temperatures below zero degree Celsius, though the decrements will be small as compared with that for the oil channels 25 (having paired linear grooves 26) as seen in Fig. 6 (line A). Similarly, it is possible to suppress the oil flow rates of the skewed channels 26b1 and spiral oil channels 26c1 from increasing while securing the necessary minimum flow rate Va of oil at very low temperatures as well as normal temperature and above, by narrowing the width of the grooves and increasing the number the grooves.

Although a multiplicity of spiral grooves (26b, 26c, and 26c1) formed in the spacer member 24 are configured as described in the foregoing examples, any number of arbitrary configuration of grooves may be used so long as they can provide a sufficient amount of oil for effectively cooling the sliding surfaces at normal temperature and suppress the oil flow rate of sticky oil supplied to the oil sump at very low temperatures.

Fig. 9 illustrates 9 oil channels having different grooves, organized in accordance with their pipe resistances and oil flow rates through them.

It is seen in the figure that a spacer member 24A having a pair of relatively wide linear grooves is adequate for use with an engine oil having a slightly temperature dependent viscosity.

The figure also shows that a spacer member 24B1 having 10 skewed wide grooves spaced apart at equal intervals in the circumferential direction is adequate for use with an engine oil having a standard temperature dependent viscosity.

The figure shows a further spacer member 24C having 10 skewed narrow grooves spaced apart at equal angular intervals in the circumferential direction which is adequate for use with an engine oil that exhibits a greatly temperature dependent viscosity

Spacers 24D1 and 24D2 have six spiral grooves forming their oil channels. However, since these grooves spiral in the opposite orientations with respect to the rotational direction of the spacer member, they will lead to different flow rates of oil through them.

Particularly, the spacer member 24D1 has grooves spiraling in the same direction as the rotational direction of the spacer member, which makes it difficult for the oil in the channels to flow, thereby permitting only a small flow rate of oil in the grooves. On the other hand, the spacer member 24D2 has grooves spiraling in the direction opposite to the rotational direction of the spacer member 24D2 (that is, in the clockwise direction), which facilitates smooth flow of oil in the oil channels, thereby permitting a high flow rate of oil in the grooves.

Thus, by taking into account of the characteristics of the oil used and by selecting the most preferable type of grooves (oil channels) from different types of grooves shown in Fig. 9, the present invention can provide an electromagnetic brake capable of maintaining its high-precision performance without losing the frictional torque acting on the friction member. This can be realized by efficiently cooling the sliding surfaces at or above normal temperature, where oil may otherwise cause clogging of slidable surface of the friction member, and by preventing stagnation of highly viscose oil in between the sliding surfaces at low temperatures, especially at very low temperatures.

### BRIEF DESCRIPTION OF SYMBOLS

- 2: camshaft
- 2a: camshaft body
- 6: fastening bolt
- 6a: head of fastening bolt
- 6a1: seat face formed at the head of fastening bolt
- 8: clutch cover
- 10: sprocket in the form of outer cylinder
- 12: body of sprocket
- 16: spline case
- 20: inner cylinder of camshaft
- 20a: leading end of inner cylinder
- S1: minute gap between inner cylinder and seat face of fastening bolt
- 22: bearing
- 24: ring shape spacer member
- 25, 25B, 25C, 25C1, 25C2, 25C3: oil channels
- 26: linear grooves
- 26b1: skewed grooves
- 26c, 26c1: spiral grooves
- 30: intermediate member
- 40: electromagnetic brake
- 42: electromagnetic clutch
- 44: rotary drum
- 60: clutch case
- 62: electromagnetic coil
- 66: flat friction member
- 70: oil paths formed in camshaft
- 74: oil sump formed radially inside clutch case

## Claims

1. A cooling structure of an electromagnetic brake provided in a phase varying apparatus for an automobile engine, wherein
a camshaft of a valve operating mechanism of the engine is rotatably and coaxially mounted on an annular sprocket driven by a crankshaft of the engine;
a rotary drum of the electromagnetic brake is rotatably mounted on the camshaft;
the electromagnetic brake is arranged in opposition to, and coaxially with, the rotary drum such that, in the phase varying apparatus, the electromagnetic brake is capable of exerting a braking force to the rotary drum to vary relative phase between the sprocket and the camshaft in association with phase retardation of the rotary drum relative to the sprocket, and wherein
the annular sprocket in the form of an outer cylinder and the rotary drum of the electromagnetic brake are integrated with, and fixedly arranged at a predetermined axial position with respect to, an inner cylinder of the camshaft via a ring shape spacer member mounted on the outer periphery of the inner cylinder;
the inner cylinder is coaxially integrated with the camshaft by means of a fastening bolt;
the electromagnetic brake comprises:
an unrotatably fixed annular clutch case having a C-shape longitudinal cross section and an opening that faces the rotary drum;
an electromagnetic coil secured on the front end of the opening of the clutch case; and
a friction member arranged in the front end of the opening of the clutch case,
the electromagnetic cooling structure comprises:
an oil sump defined by a clutch cover surrounding a head of the fastening screw and supporting the back end of the clutch case,
minute oil paths formed between the inner periphery of the inner cylinder and the outer periphery of the fastening screw, and communicated with the oil sump via at least one oil channel that cross the inner cylinder,
the cooling structure **characterized in that**:
the spacer member and the inner cylinder are coaxially and fixedly jointed together between the head of the fastening bolt and the camshaft to form a minute gap therebetween; and
the spacer member is provided in the surface thereof in abutting contact with a seat face of the head of the fastening bolt with the same number of radial oil groove(s) to form said oil channel(s);

2. The cooling structure of an electromagnetic brake according to claim 1, wherein the spacer member is force fitted onto the outer periphery of the inner cylinder.

3. The cooling structure according to claim 1 or claim 2, wherein the spacer member is provided with a multiplicity of grooves spaced apart at equal angular intervals in the circumferential direction of the space member.

4. The cooling structure according to claim 3, wherein the spacer member is provided with a sufficient number of skewed grooves of adequate width, length, and skew angle with respect to radii thereof or a sufficient number of spiral grooves of adequate width, and increasing skew angle with respect to radii thereof, to establish said oil channels in such a way that the grooves not only ensure a sufficient flow rate of oil to the sliding surfaces of the friction member and the rotary drum without affecting the oil supply to other components of the engine at normal temperature, but also suppress the flow rate of oil to the sliding surfaces even at low temperatures.

5. The cooling structure according to claim 3, wherein the grooves formed in the spacer member are skewed in the direction opposite to the rotational direction of the camshaft.
